# EUROPEAN PATENT SPECIFICATION

(11) **EP 1 626 037 B1**
(45) Date of publication and mention of the grant of the patent: **04.06.2008**
(21) Application number: 04801922.8
(22) Date of filing: 24.12.2004
(51) Int. Cl.: C04B 37/00, B01D 39/20, B01D 46/00, B01J 32/00, B01J 35/04, F01N 3/022, F01N 3/28

(54) **HONEYCOMB STRUCTURE AND METHOD FOR PRODUCING THE SAME**
WABENSTRUKTUR UND HERSTELLUNGSVERFAHREN DAFÜR
STRUCTURE EN NID D'ABEILLES ET PROCÉDÉ DE PRODUCTION DE CELLE-CI

(30) Priority: 06.05.2004 JP 2004137728
(43) Date of publication of application: 15.02.2006
(73) Proprietor: IBIDEN CO., LTD., Ogaki-shi, Gifu-ken 503-8604 (JP)
(72) Inventor: TAKAHASHI, Tomohisa c/o Ibiden Co., Ltd., Ibi-gun, Gifu 5010695 (JP)
(74) Representative: Hart-Davis, Jason
(86) International application number: PCT/JP2004/019382
(87) International publication number: WO 2005/108328

(56) References cited:
- WO-A-20/04096414
- WO-A1-03/078026
- JP-A- 2001 096 116
- JP-A- 2002 273 130
- JP-A- 2003 291 054
- US-A- 4 177 307

## Description

This application claims benefit of priority to Japanese Patent Application No. 2004-137728, filed on May 6, 2004, the contents of which are incorporated by reference herein.
The present invention relates to a honeycomb structural body that is used as a filter for removing particulates and the like contained in exhaust gases discharged from an internal combustion system such as a diesel engine or the like, a catalyst supporting member and the like.

In recent years, particulates, such as soot and the like, contained in exhaust gases that are discharged from internal combustion engines of vehicles, such as buses, trucks and the like, and constructionmachines and the like, have raised serious problems as those particulates are harmful to the environment and the human body.
In order to solve these problems, various honeycomb structural bodies made of porous ceramics, which serve as filters capable of collecting particulates in exhaust gases to purify the exhaust gases, have been proposed.

Conventionally, with respect to the honeycomb structural body of this type, a honeycomb structural body comprising: a ceramic block in which a plurality of honeycomb units are bonded each other through a sealing material layer, said honeycomb unit is mainly composed of porous ceramic and includes a large number of through holes placed in parallel with one another in a length direction with a partition wall interposed therebetween; and a sealing material layer formed on a peripheral portion thereof, has been known.

With respect to these honeycomb structural bodies, most of them have a circular shape on the cross section perpendicular to the length direction; however, in recent years, honeycomb structural bodies having various shapes on the cross section perpendicular to the length direction, such as an elongated round shape (race-track shape), an elliptical shape, an approximately triangular shape, an approximately trapezoidal shape and the like, have been proposed (for example, see Patent Documents 1 to 4).

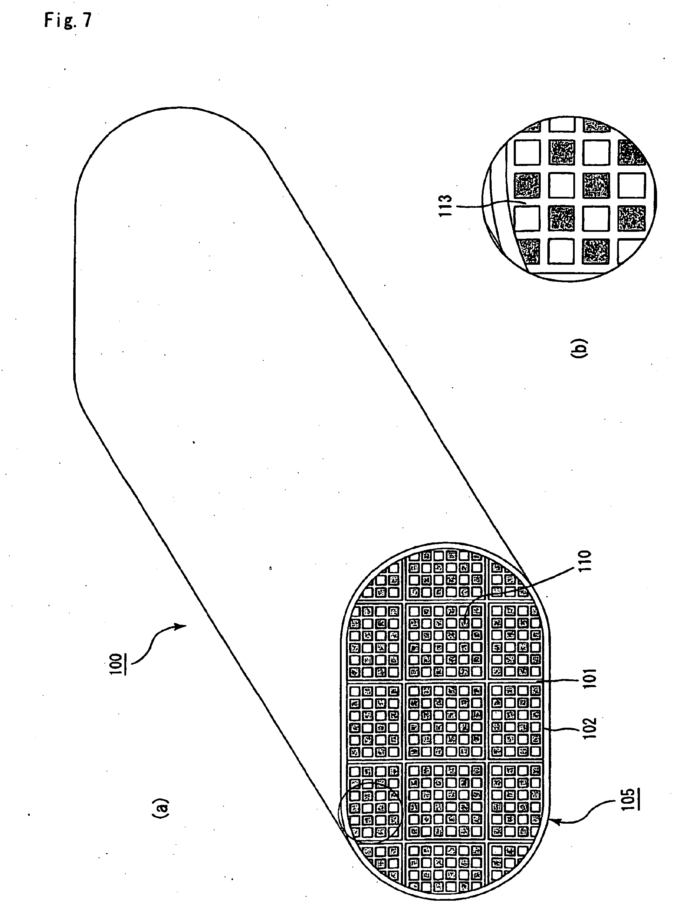

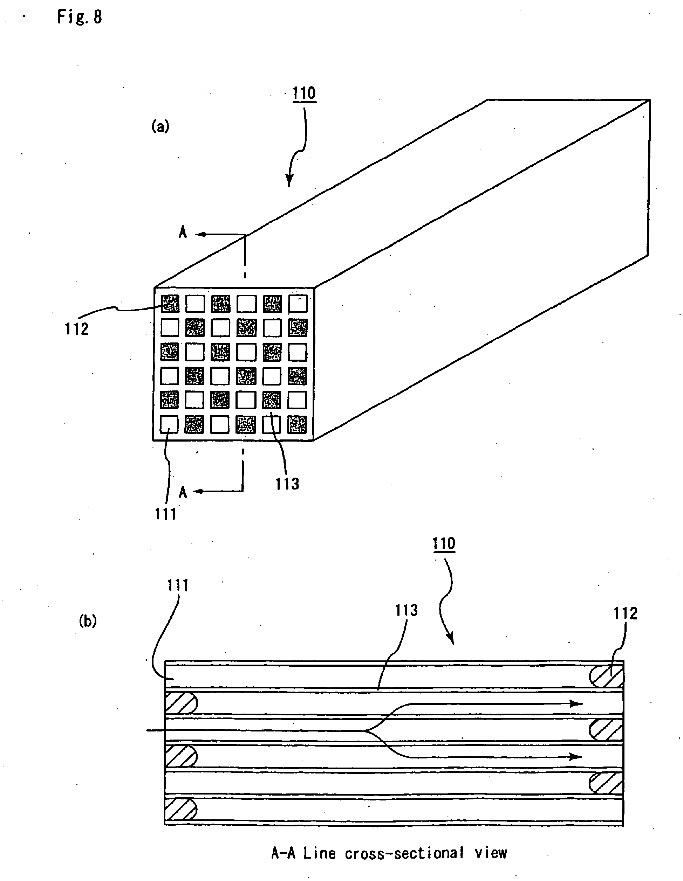

Fig. 7(a) is a perspective view that schematically shows a honeycomb filter formed by such a honeycomb structural body, and Fig. 7(b) is a partially enlarged perspective view that shows one portion thereof. Moreover, Fig. 8 (a) is a perspective view that schematically shows one example of a honeycomb unit that forms the honeycomb filter shown in Fig. 7, and Fig. 8(b) is a cross-sectional view taken along line A-A of Fig. 8(a).

As shown in Fig. 7(a) , a honeycomb filter 100 has a structure inwhichapluralityof honeycomb units 110 made of silicon carbide or the like are combined with one another to form a ceramic block 15 through an adhesive layers 101, with a coat layer 102 being formed on the periphery of this ceramic block 105. The end face of this honeycomb filter 100 has an elongated round shape, and the pattern of the sealing material layer among the honeycomb units on the cross-section perpendicular to the length direction is designed so as to be approximately perpendicular to the major axis of the shape forming the contour of the cross section.

As shown in Figs. 8(a) and 8(b), in the honeycomb unit 110, a number of through holes 111 are placed in parallel with one another in the length direction so that the partition wall 113 that separates the through holes 111 fromeach other is allowed to function as a filter. In other words, as shown in Fig. 8 (b), each of the through holes 111 formed in the honeycomb unit 110 is sealed with a plug 112 at either of ends of its exhaust gas inlet side and outlet side so that exhaust gases that have entered one through hole 111 are discharged from another through hole 111 after having always passed through the partition wall 113 that separates the corresponding through holes 111.

Uponmanufacturing such a honeycomb structural body having an elliptical shape on its cross section perpendicular to the length direction, first, after having manufactured honeycomb units each of which is made of porous ceramics with its end face being sealed so as to form a checked pattern as shown in Fig. 8, these pluralities of honeycomb units are bonded to one another through sealing material, and dried to form a honeycomb unit aggregated body.
Next, this honeycomb unit aggregated body is subjected to a cutting process such that the cross section perpendicular to the length direction is formed into an elongated round shape, and at this time, the cutting process is carried out so that in the elongated round shape, the pattern of the sealing material layer among the honeycomb units on the cross section is designed so as to be approximately perpendicular to the major axis of the shape forming the contour of the cross section, and a sealing material layer is lastly formed on the periphery thereof, and dried; thus, the manufacturing process of the honeycomb filter is completed.

The above-mentioned document has described that the honeycomb structural body having such a shape exerts such effects that it can suppress a reduction in resistance against canning (canning strength).

In the honeycomb filter shown in Fig. 7, however, in the cross section perpendicular to the length direction, the sealing material layer is formed with an approximately right angle with respect to the major axis of the elliptical shape forming the contour of the cross section, and the sealing material layer formed with the right angle with respect to the major axis is comparatively short.
When a honeycomb structural body having such a shape is placed in an exhaust pipe of an internal combustion engine, a stress tends to be concentrated in the minor axis direction at increased temperatures, and in particular, the stress is concentrated on the portion of the sealing material layer having a short length; thus, the joint portion between the sealing material layer serving as the coat layer formed on the periphery and the sealing material layer serving as the an adhesive layer becomes likely to be damaged, resulting in a problem of a reduction in the bonding strength.

Moreover, as shown in Fig. 7(b) , in the part close to the minor axis, there is a portion in which the partition wall 113 is thinly formed; thus, the strength in this portion becomes lower, to make this portion fragile to a physical impact, resulting in a problem of occurrence of cracks during transportation or the like.

In the case where an object having an elliptical shape on its cross section is formed through a cutting process, upon cutting the portion close to the minor axis, there is a portion that forms the right angle with respect to the cutting direction, and this portion is more likely to receive a greater stress through the cutting process and easily broken. Therefore, it is necessary to reduce the cutting speed so as not to cause damages to portions except the portion to be cut and removed, and this causes problems of a longer cutting time and high manufacturing costs.

### Patent Document 1:

JP-A 2002-273130

### Patent Document 2:

JP-A 2003-260322

### Patent Document 3:

WO 03/078026, A1

### Patent Document 4:

JP-A 2003-181233

The present invention has been devised to solve the above-mentioned problems, and its object is to provide a honeycomb structural body, which has a flat shape, makes its sealing material layer less likely to be damaged at increased temperatures, maintains high bonding strength and is superior in resistance to a physical impact.
Moreover, another object of the present invention is to provide a manufacturing method of a honeycomb structural body, which, upon manufacturing a honeycomb structural body having a flat shape, can carry out a cutting process or the like quickly to efficiently manufacture the honeycomb structural body.

The honeycomb structural body of the present invention is a honeycomb structural body comprising:
a ceramic block having a flat shape in which a plurality of honeycomb units are bonded each other through a sealing material layer, said honeycomb unit is mainly composed of porous ceramic and includes a large number of through holes placed in parallel with one another in a length direction with a partition wall interposed therebetween; and
a sealing material layer formed on a peripheral portion thereof, wherein the sealing material layer among the honeycomb units on a cross section perpendicular to the length direction has a pattern that is formed in a diagonal direction with respect to the major axis of the shape forming the contour of the cross section.

In the honeycomb structural body of the present invention, desirably, the honeycomb unit has a cross-sectional area of 25 cm² or less in a direction perpendicular to the length direction, and the angle, formed by the pattern of the sealing material layer among the honeycomb units on the cross section perpendicular to the length direction and the major axis in the shape forming the contour of the cross section, is set in a range from 5 to 85°.

Desirably, the honeycomb unit forming the honeycomb structural body of the present invention is made of silicon carbide-natured ceramics, and has a structure in which a catalyst is supported thereon, and each of the through holes is sealed on either one of the ends.

The manufacturing method for a honeycomb structural body of the present invention is a method for manufacturing a honeycomb structural body having a flat shape, comprising the steps of: the honeycomb unit bonding process of bonding a plurality of honeycomb units, each of which is mainly composed of porous ceramics and includes a large number of through holes placed in parallel with one another in the length direction with a partition wall interposed therebetween, to one another through a sealing material layer and drying the honeycomb units; and
the ceramic block manufacturing process of carrying out a cutting process on a honeycomb unit aggregated body in which a plurality of honeycomb units are bonded each other through a sealing material layer in a manner that the pattern of the sealing material layer among the honeycomb units on a cross section perpendicular to the length direction is formed in a diagonal direction with respect to the major axis of the shape forming the contour of the cross section so as to obtain a ceramic block having a flat shape.

In accordance with the honeycomb structural body of the present invention, since the pattern of the sealing material layer among the honeycomb units on a cross section perpendicular to the length direction is formed in a diagonal direction with respect to the major axis of the shape forming the contour of the cross section, it becomes possible to prevent a stress from being concentrated on a gap between the sealing material layer serving as an adhesive located at an inner portion close to the minor axis and the sealing material layer serving as a peripheral coat layer, and consequently to make the sealing material layer less likely to be damaged at increased temperatures; thus, the sealing material layer are allowed to properly maintain the bonding strength.
Moreover, since it becomes possible to reduce thinner portions located in the partition wall, the honeycomb structural body is allowed to have higher resistance to a physical impact and superior durability.

In accordance with the manufacturing method of a honeycomb structural body of the present invention, since the cutting process is carried out so as to allow the sealing material layer among the honeycomb units on a cross section perpendicular to the length direction to have a pattern that is formed in a diagonal direction with respect to the major axis of the shape forming the contour of the cross section so that a ceramic block having a flat shape is manufactured; thus, it becomes possible to quickly carry out the cutting process and the like, and consequently to efficiently manufacture a honeycomb structural body.

Incidentally, Patent Document 1, described as one of the listed patent documents, has discussed a structure in which the pattern of the sealing material layer among the honeycomb units on a cross section perpendicular to the length direction is formed in a diagonal direction with respect to the major axis of the shape forming the contour of the cross section in the same manner as the present invention. However, this honeycomb structural body is manufactured not by carrying out cutting processes, but by combining honeycomb units manufactured with various shapes and bonding these to one another to form a honeycomb structural body having a predetermined shape; therefore, this arrangement causes a problem of complex manufacturing processes.

Moreover, different from the honeycomb structural body of the present invention in that no peripheral sealing material layer is formed, this arrangement causes a low isostatic strength and the subsequent susceptibility to damage.
Furthermore, the area on the cross section perpendicular to the length direction of the honeycomb unit is set to 55 mm in each side, which is too large in the cross-sectional area; therefore, it is difficult tomaintain the temperature uniformity at increased temperatures and the like, and the resulting problems are weakness to thermal impact and occurrence of cracks and the like.

The honeycomb structural body of the present invention is a honeycomb structural body compri sing: a ceramic block having a flat shape in which a plurality of honeycomb units are bonded each other through a sealing material layer, said honeycomb unit is mainly composed of porous ceramic and includes a large number of through holes placed in parallel with one another in a length direction with a partition wall interposed therebetween; and a sealing material layer formed on a peripheral portion thereof, wherein the sealing material layer among the honeycomb units on a cross section perpendicular to the length direction has a pattern that is formed in a diagonal direction with respect to the major axis of the shape forming the contour of the cross section.

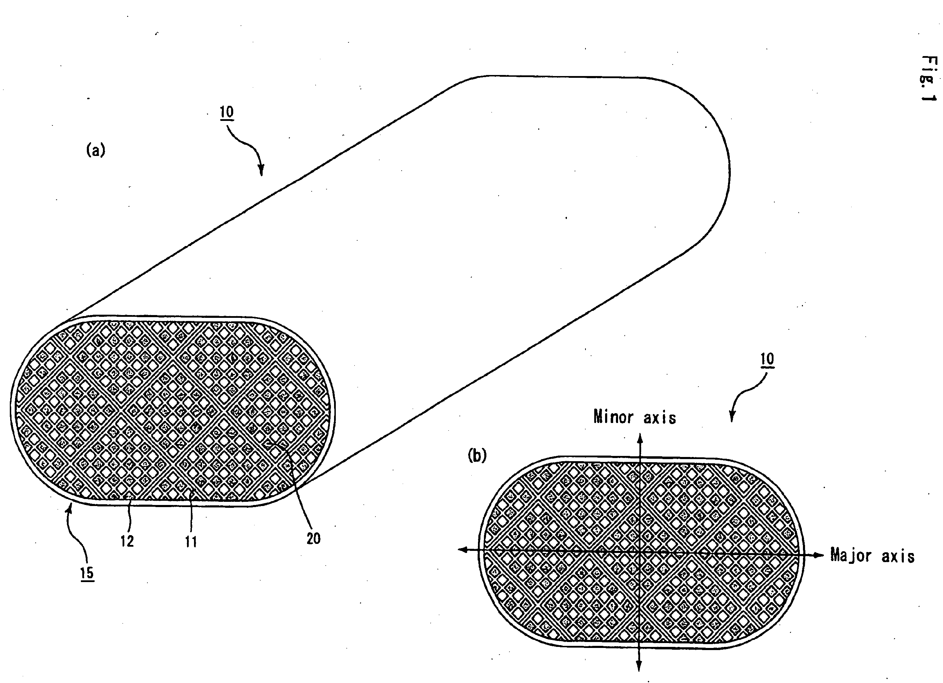

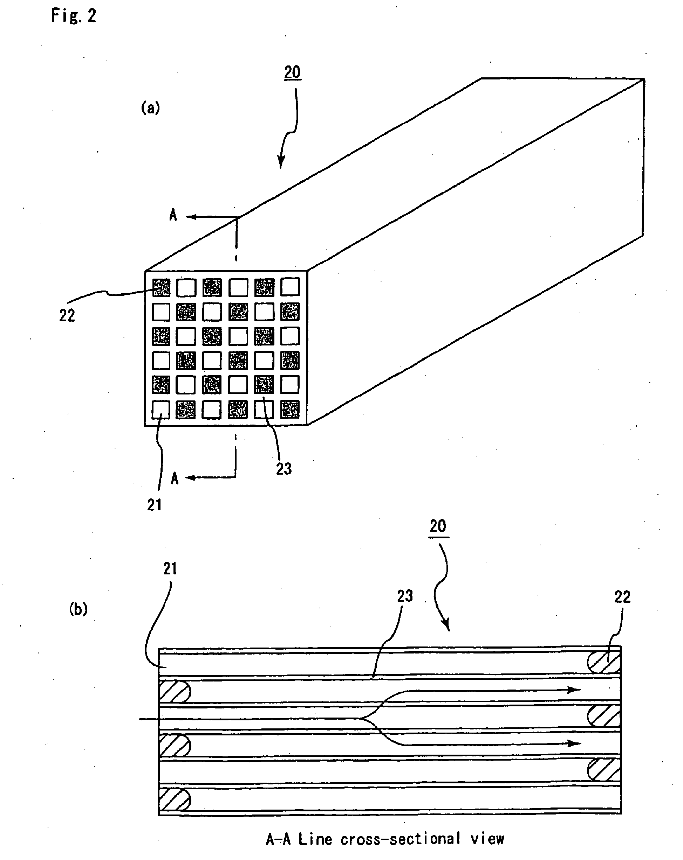

Fig. 1(a) is a perspective view that schematically shows one example of a honeycomb structural body of the present invention, and Fig. 1(b) shows the major axis and the minor axis of the honeycomb structural body of Fig. 1(a). Fig. 2(a) is a perspective view that schematically shows one example of a honeycomb unit that forms the honeycomb structural body of the present invention, and Fig. 2 (b) is a cross-sectional view taken along line A-A of the honeycomb unit shown in Fig. 2(a).

As shown in Fig. 1(a) , a honeycomb structural body 10 has a structure in which a plurality of honeycomb units 20 each of which is made of silicon carbide or the like are combined with one another through a sealing material layer (adhesive layer) 11 to form a ceramic block 15, and a sealing material layer (coat layer) 12 is formed on the periphery of the ceramic block 15. The end face of this honeycomb filter 10 has an elongated round shape (race-track shape) , and the pattern of the sealing material layer among the honeycomb units on a cross section perpendicular to the length direction is formed in a diagonal direction with respect to the major axis of the shape forming the contour of the cross section.

As shown in Figs. 2(a) and 2(b), in the honeycomb unit 20, a number of through holes 21 are placed in parallel with one another in the length direction so that the partition wall 23 that separates the through holes 21 from each other is allowed to function as a filter. In other words, as shown in Fig. 2 (b) , each of the through holes 21 formed in the honeycomb unit 20 is sealed with a plug 22 at either of ends of its exhaust gas inlet side and outlet side so that exhaust gases that have entered one through hole 21 are discharged from another through hole 21 after having always passed through the partition wall 23 that separates the corresponding through holes 21.

In the present invention, since the pattern of the sealing material layer (adhesive layer) 11 among the honeycomb units 20 on a cross section perpendicular to the length direction is formed in a diagonal direction with respect to the major axis of the shape (elongated round shape) forming the contour of the cross section, the angles, formed by the sealing material layer (adhesive layer) 11 among honeycomb units 20 and the sealing material layer (coat layer) 12 on a cross section perpendicular to the length direction, tend to be diagonal in many portions.

In the case where the pattern of the sealing material layer among honeycomb units on a cross section perpendicular to the length direction is made perpendicular to the major axis in the shape forming the contour of the cross section in the same manner as the conventional structure, the angles, formed by the sealing material layer (adhesive layer) 101 and the sealing material layer (coat layer) 12, tend to be set approximately perpendicularly set in many portions, making the area at which the two members are made in contact with each other smaller.
Since the sealing material (bonding material, coating material) and the honeycomb unit have mutually different coefficients of thermal expansion and the like, a stress is exerted between the sealing material layer (adhesive layer) 101 and the sealing material layer (coat layer) 102 at increased temperatures due to the difference in coefficients of thermal expansion; consequently, the stress is exerted perpendicularly to the sealing material layer (coat layer) 102, and since the contact area between the two members is small, the stress is further increased; thus, the sealingmaterial layer (coat layer) 102 becomes more likely to be damaged (see Fig. 7).

In contrast, in the present invention, the pattern of the sealing material layer (adhesive layer) 11 among the honeycomb units 20 on a cross section perpendicular to the length direction tends to be formed in a diagonal direction with respect to the sealing material layer (coat layer) 12 at many portions, and the contact area between the sealing material layer (adhesive layer) 11 and the sealing material layer (coat layer) 12 is large, therefore the force, exerted perpendicularly to the sealing material layer (coat layer) 12, becomes smaller, making it possible to prevent occurrence of damage to the sealing material layer (coat layer) 12.

Moreover, since the pattern of the sealing material layer (adhesivelayer) 11 among the honeycomb units 20 on a cross section perpendicular to the length direction is formed in a diagonal direction with respect to the major axis of the shape forming the contour of the cross section, the angles, formed by the pattern and the partition wall 23 forming the honeycomb units 20, are also set diagonally so that, upon cutting the partition wall 23, it is possible to prevent the partition wall 23 from being cut too thinly and consequently to provide a honeycomb structural body that is superior in resistance to physical impact as well as in durability.

In the present invention, the angle, formed by the pattern of the sealing material layer 11 among the honeycomb units on a cross section perpendicular to the length direction and the major axis of the peripheral pattern, is desirably set to a minimum value of 5°, more desirably 15°, most desirably 30°. Moreover, the angle, formed with the major axis of the peripheral pattern, is desirably set to a maximum value of 85°, more desirably 75°, most desirably 60°.
When the angle, formed by the pattern of the sealing material layer 11 among the honeycomb units 20 on a cross section perpendicular to the length direction and the major axis of the peripheral pattern, is less than 5° or exceeds 85°, there is approximately no difference compared to the case where the pattern is formedperpendicularly, and the sealingmaterial layer become more likely to be damaged due to thermal impact and the like; thus, in some portions, thinner partition wall is formed, with a reduction in the strength of the corresponding portions.

In the present invention, the cross-sectional area perpendicular to the length direction of honeycomb units forming the honeycomb structural body is desirably set to 25 cm² or less. Moreover, the cross-sectional area is desirably set to 1 cm² or more.
In the case where the cross-sectional area perpendicular to the length direction of honeycomb units forming the honeycomb structural body is 25 cm² or less, since the cross-sectional area is small, the temperature difference between the center portion and the peripheral portion is not made too large even at increased temperatures so that the thermal stress is not made too large, thereby allowing the honeycomb unit to have high resistance to thermal impact.

The honeycomb structural body of the present invention is mainly made of a porous ceramic material, and examples of the material include: nitride ceramics such as aluminum nitride, silicon nitride, boron nitride, titanium nitride and the like; carbide ceramics such as silicon carbide, zirconium carbide, titanium carbide, tantalum carbide, tungsten carbide and the like; and oxide ceramics such as alumina, zirconia, cordierite, mullite, silica and the like, and the like. Moreover, the honeycomb structural body 10 may be made of a composite material of silicon and silicon carbide, or may be made of two or more kinds of materials such as aluminum titanate.
With respect to the material for the porous ceramics, a silicon carbide-natured ceramic, which has high heat resistance and high thermal conductivity, and is superior in mechanical properties, is desirably used. Here, the silicon carbide-natured ceramic is defined as such a material containing 60% by weight or more of silicon carbide.

With respect to the particle size of the ceramic material to be used upon manufacturing the honeycomb structural body 10, although not particularly limited, those materials that are less likely to shrink in the succeeding firing process are desirably used, and for example, those materials, prepared by mixing 100 parts by weight of powder having an average particle size in a range from 0.3 to 50 µm and 5 to 65 parts by weight of powder having an average particle size in a range from 0.1 to 1.0 µm, are desirably used. By mixing ceramic powders having the above-mentioned particle sizes at the above-mentioned blending ratios, an integral honeycomb structural body made of porous ceramics is manufactured.

Here, the plugs 22 and the partition wall 23 forming the honeycomb unit 20 are desirably made of the same porous ceramic material. This arrangement makes it possible to increase the bonding strength between the two members, and by adjusting the porosity of the plugs 22 in the same manner as that of the partition wall 23, it is possible to take the matching of the coefficient of thermal expansion of the partition wall 23 and the coefficient of thermal expansion of the plugs 22; thus, it becomes possible to prevent the occurrence of a gap between the plug 22 and the partition wall 23 and the occurrence of a crack in the plug 22 or in the partition wall 23 at a portion with which the plug 22 comes in contact, due to a thermal stress that is exerted upon production as well as upon use.

In addition to the above-mentioned ceramics, the plugs 22 may contain metal and the like in order to adjust the thermal capacity thereof.
With respect to the metal, not particularly limited, examples thereof include iron, aluminum, metal silicon (Si) and the like. Each of these may be used alone, or two or more kinds of these may be used in combination.

The thickness of the plug 22 is not particularly limited. However, in the case where the plugs 22 are made of porous silicon carbide, the thickness thereof is desirably set in a range from 1 to 40 mm, more desirably 3 to 20 mm.

The thickness of the partition wall 23 is not particularly limited. However, the lower limit value is desirably set to 0.1 mm, and the upper limit value is desirably set to 1.2 mm. The thickness of less than 0.1 mm tends to cause an insufficient strength in the honeycomb structural body 10. The thickness exceeding 1.2 mm makes it difficult to heat the partition wall 23 corresponding to a portion that comes into contact with the plug 22 for sealing the group of inlet-side through holes 21a; thus, cracks tend to occur due to a thermal stress in the vicinity of the interface between the plug 22 and the partition wall 23.

In the honeycomb structural body 10 of the present invention, the sealing material layer 11, which is formed among the honeycomb units 20, desirably serves as an adhesive that bonds the honeycomb units 20 to one another. The sealingmaterial layer 12, on the other hand, which is formed on the peripheral face of the ceramic block 15, serves as a sealing material that prevents exhaust gases flowing through the through holes from leaking from the peripheral face of the ceramic block 15, when the honeycomb structural body 10 is placed in an exhaust passage in an internal combustion engine.
Here, in the honeycomb unit 10, the sealing material layer 11 and the sealing material layer 12 may be made of the same material, or may be made of different materials. In the case where the sealing material layer 11 and the sealing material layer 12 are made of the same material, the blending ratio of the materials may be the same or different from each other.

The sealingmaterial layer 11 maybe made of a dense material or may be made of a porous material so as to allow exhaust gases to flow therein; however, the sealing material layer 12 is desirably made of a dense material. This is because the sealing material layer 12 is formed so as to prevent leak of exhaust gases from the peripheral face of the ceramic block 15 when the honeycomb unit 10 is placed in an exhaust passage of an internal combustion engine.
The minimum value of the thickness of the sealing material layer 11 is desirably set to 0.1 mm, more desirably 0.2 mm.
Moreover, the maximum value of the thickness of the sealing material layer 11 is desirably set to 10 mm, more desirably 3 mm.
The minimum value of the thickness of the sealing material layer 12 is desirably set to 0.1 mm. Moreover, the maximum value of the thickness of the sealing material layer 11 is desirably set to 10 mm, more desirably 4 mm.

With respect to the material for forming the sealing material layer 11 and the sealing material layer 12, not particularly limited, examples thereof include an inorganic binder, an organic binder and a material made of inorganic fibers and/or inorganic particles.

With respect to the inorganic binder, for example, silica sol, alumina sol and the like may be used. Each of these may be used alone or two or more kinds of these may be used in combination. Among the inorganic binders, silica sol is more desirably used.

With respect to the organic binder, examples thereof include polyvinyl alcohol, methyl cellulose, ethyl cellulose, carboxymethyl cellulose and the like. Each of these may be used alone or two or more kinds of these may be used in combination. Among the organic binders, carboxymethyl cellulose is more desirably used.

With respect to the inorganic fibers, examples thereof include ceramic fibers, such as silica-alumina, mullite, alumina, silica and the like, and the like. Each of these may be used alone or two or more kinds of these may be used in combination. Among the inorganic fibers, alumina fibers and silica-alumina fibers are more desirably used. With respect to the fiber length of the inorganic fibers, the lower limit thereof is desirably set to 5 µm. The upper limit of the fiber length of the inorganic fibers is desirably set to 100 mm, more desirably 100 µm. The fiber length of less than 5 µm tends to fail to improve the elasticity of the sealingmaterial layer. In contrast, the fiber length exceeding 100 mm tends to cause pill-state inorganic fibers and the subsequent degradation in dispersion in the inorganic particles. Moreover, the fiber length exceeding 100 µm makes it difficult to make the thickness of the sealingmaterial layer thinner.

With respect to the inorganic particles, examples thereof include carbides, nitrides and the like, and specific examples include inorganic powder, whiskers or the like made of silicon carbide, silicon nitride, boron nitride and the like. Each of these may be used alone, or two or more kinds of these may be used in combination. Among the inorganic fine particles, silicon carbide having a superior thermal conductivity is desirably used.
Moreover, a pore-forming agent, such as balloons that are fine hollow spheres composed of oxide-based ceramics, spherical acrylic particles, graphite and the like, may be added to the above-mentioned sealing material (plug) paste, if necessary.
With respect to the above-mentioned balloons, not particularly limited, for example, alumina balloons, glass micro-balloons, shirasuballoons, flyashballoons (FAballoons), mullite balloons and the like may be used. Among these, alumina balloons are more desirably used.

Although not particularly limited, the lower limit of the porosity of the honeycomb structural body 10 is desirably set to 20%, and the upper limit thereof is desirably set to 80%. When the porosity is less than 20%, the honeycomb structural body 10 is more likely to have clogging, while the porosity exceeding 80% causes degradation in the strength of the honeycomb structural body 10; thus, it might be easily broken.
Here, the above-mentioned porosity can be measured through known methods, such as a mercury injection method, Archimedes method and a measuring method using a scanning electronic microscope (SEM).

The lower limit of the average pore diameter of the honeycomb structural body 10 is desirably set to 1 µm, and the upper limit thereof is desirably set to 100 µm. The average pore diameter of less than 1 µm tends to cause clogging of particulates easily. In contrast, the average pore diameter exceeding 100 µm tends to cause particulates to pass through the pores; thus, the particulates cannot be collected, making the structural body unable to function as a filter.

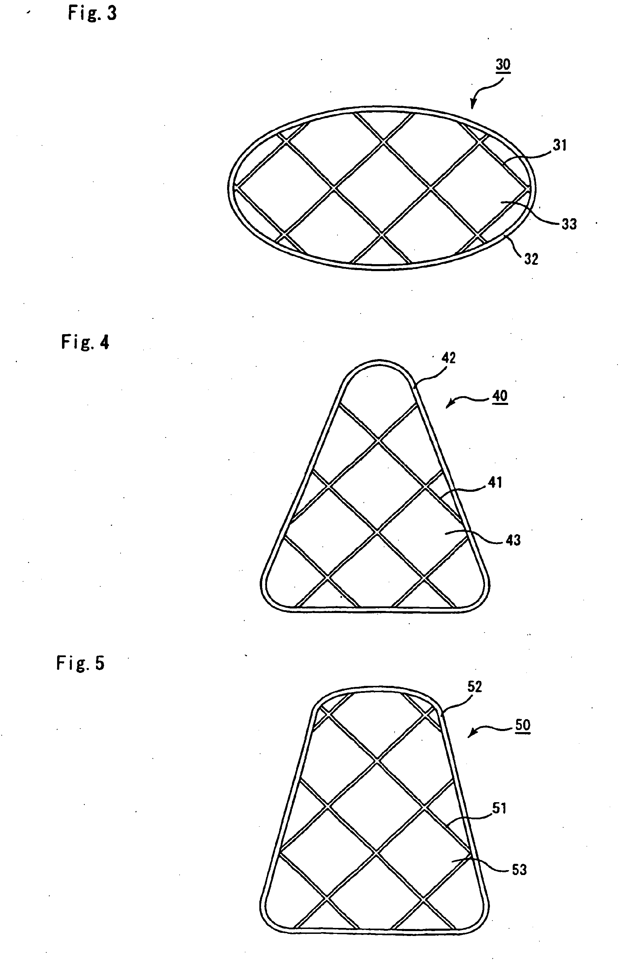

The honeycomb structural body 10 shown in Fig. 1 has an elongated round shape (race track shape); however, the shape of the honeycomb structural body of the present invention is not particularly limited as long as it has a flat shape, and, for example, an elliptical shape on the cross section perpendicular to the length direction as shown in Fig. 3, or the like is proposed, and those shapes as shown in Figs. 4 and 5 may also be used. In Figs. 3 to 5, reference numerals 31, 41 and 51 represent inner sealing material layer, reference numerals 32, 42 and 52 represent peripheral sealing material layer, and reference numerals 33, 43 and 53 represent honeycomb units.

Moreover, in the honeycomb structural body of the present invention, the through holes may be constituted by two types of through holes, that is, a group of inlet-side through holes with ends on the outlet side being sealed with plugs so that the total sum of areas on cross sections perpendicular to the length direction is made relatively greater and a group of outlet-side through holes with ends on the inlet side being sealed with the plugs so that the total sum of areas on the cross sections thereof is made relatively smaller, with respect to the entire end face of the honeycomb structural body.

With respect to the combination between the above-mentioned group of inlet-side through holes and group of outlet-side through holes, the following combinations are listed: (1) a case where, with respect to each of through holes constituting the inlet-side through holes and each of through holes constituting the outlet-side through holes, the areas of cross sections perpendicular to the length direction are the same, while the number of the through holes constituting the group of inlet-side through holes is greater; (2) a case where, with respect to each of through holes constituting the inlet-side through holes and each of through holes constituting the outlet-side through holes, the areas of cross sections thereof are different from each other, with the numbers of the respective through holes also being different from each other; and (3) a case where, with respect to each of through holes constituting the inlet-side through holes and each of through holes constituting the outlet-side through holes, the area of the cross section of the through holes constituting the group of inlet-side through holes is greater, with the numbers of the through holes of the two groups being the same.
Moreover, the through holes forming the group of inlet-side through holes and/or the through holes forming the outlet-side through holes may be constituted by one type of through holes having the same shape and the same area on the cross section perpendicular to the length direction, or may be constituted by two or more types of through holes having different shape and area on the cross section perpendicular to the length direction.

A catalyst, which can convert CO, HC, NOx and the like in exhaust gases, may be supported on the honeycomb structural body 10.
The honeycomb structural body 10 in which the catalyst is supported is allowed to function as a filter capable of collecting particulates in exhaust gases, and also to function as a catalyst converter for converting CO, HC, NOx and the like contained in exhaust gases.

With respect to the catalyst to be supported on the honeycomb structural body 10, although not particularly limited as long as it can convert CO, HC, NOx and the like in exhaust gases, examples thereof include noble metals, such as platinum, palladium, rhodium and the like, and the like. Among these, a so-called three-way catalyst, made of platinum, palladium and rhodium, is desirably used. Moreover, in addition to the noble metal, an element, such as an alkali metal (Group 1 in Element Periodic Table), an alkali earth metal (Group 2 in Element Periodic Table), a rare-earth element (Group 3 in Element Periodic Table), a transition metal element and the like, may be supported thereon as a co-catalyst.

The above-mentioned catalyst may be supported on the surface of each of pores of the honeycomb structural body 10, or may be supported on the surface of the partition wall 23 with a certain thickness. Moreover, the above-mentioned catalyst may be supported on the surface of the partition wall and/or the surface of each of pores evenly, or may be supported on a certain fixed place thereof in a biased manner. Among these, the catalyst is desirably supported on the surface of the partition wall 23 or the surface of each of pores in the vicinity of the surface of the partition wall 23 in the through holes 21 that constitute the group of inlet-side through holes, and is more desirably supported on both of these surfaces. This arrangement easilymakes the catalyst and particulates in contact with each other, thereby making it possible to burn the particulates more effectively.

Moreover, upon applying the catalyst to the honeycomb structural body 10, it is desirable to apply the catalyst after the surface thereof has been coated with a support member such as alumina or the like. With this arrangement, the specific surface area is made greater so that the degree of dispersion of the catalyst is improved and the reaction sites of the catalyst are increased. Since it is possible to prevent sintering of the catalyst metal by the support member, the heat resistance of the catalyst is also improved. In addition, it becomes possible to reduce the pressure loss.

The honeycomb structural body of the present invention is allowed to function as a gas purifying device in the same manner as conventionally known DPFs (Diesel Particulate Filters) with a catalyst. Therefore, with respect to the case where the integral honeycomb structural body of the present invention is used as a catalyst supporting member, detailed description of the functions thereof is omitted.

The following description will discuss one example of a manufacturing method for the above-mentioned honeycomb structural body of the present invention.
First, an extrusion-molding process was carried out by using the material paste mainly composed of the above-mentioned ceramics so that a ceramic molded body having a quadrangular pillar-shape was manufactured.

With respect to the material paste, not particularly limited, any material paste may be used as long as the porosity of the honeycomb structural body after the manufacturing process is set in a range from 20 to 80%, and, for example, a material paste, prepared by adding a binder, a dispersant solution and the like to powder made of the above-mentioned ceramics, may be used.

With respect to the ceramic powder, not particularly limited, examples thereof include: oxide ceramics such as cordierite, alumina, silica, mullite and the like; carbide ceramics such as silicon carbide, zirconium carbide, titanium carbide, tantalum carbide, tungsten carbide and the like; and nitride ceramics such as aluminum nitride, silicon nitride, boron nitride, titanium nitride and the like, and powder of a composite material of silicon carbide and silicon, and among these, silicon carbides, which have high heat resistance and high thermal conductivity, and are superior in mechanical properties, are more desirably used.

With respect to the particle size of ceramic powder, although not particularly limited, materials which are less likely to shrink in the succeeding firing process are desirably used, and for example, those mixed powders, prepared by combining 100 parts by weight of powder having an average particle size from 0.3 to 50 µm with 5 to 65 parts by weight of powder having an average particle size from 0.1 to 1.0 µm, are desirably used.

With respect to the above-mentioned binder, not particularly limited, examples thereof include methylcellulose, carboxy methylcellulose, hydroxy ethylcellulose, polyethylene glycol, phenol resins, epoxy resins and the like.
Normally, the blending amount of the above-mentioned binder is desirably set to 1 to 10 parts by weight to 100 parts by weight of ceramic powder.

With respect to the above-mentioned dispersant solution, not particularly limited, for example, an organic solvent such as benzene or the like, alcohol such as methanol or the like, water and the like may be used.
An appropriate amount of the above-mentioned dispersant solution is blended so that the viscosity of the material paste is set in a predetermined range.

These ceramic powder, binder and dispersant solution are mixed by an attritor or the like, and sufficiently kneaded by a kneader or the like, and then extrusion-molded.

Moreover, a molding auxiliary may be added to the above-mentioned material paste, if necessary.
With respect to the molding auxiliary, not particularly limited, examples thereof include: ethylene glycol, dextrin, fatty acid soap, polyalcohol and the like.

Furthermore, a pore-forming agent, such as balloons that are fine hollow spheres composed of oxide-based ceramics, spherical acrylic particles, graphite and the like, maybe added to the above-mentioned material paste, if necessary.
With respect to the above-mentioned balloons, not particularly limited, for example, alumina balloons, glass micro-balloons, shirasu balloons, flyash balloons (FA balloons), mullite balloons and the like may be used. Among these, alumina balloons are more desirably used.

Next, the above-mentioned ceramic molded body is dried by using a dryer, such as a microwave dryer, a hot-air dryer, a dielectric dryer, a decompression dryer, a vacuum dryer, a freeze dryer and the like, to form a ceramic dried body. Next, a predetermined amount of sealing material (plug) paste, which forms plugs, is injected into ends on the outlet side of the group of the inlet-side through holes and ends on the inlet side of the group of the outlet-side through holes so as to seal the through holes.

With respect to the above-mentioned sealing material (plug) paste, not particularly limited as long as the porosity of a plug manufactured through post-processes is set in a range from 20 to 80%, for example, the same material paste as described above may be used; however, those pastes, prepared by adding ceramic fibers, powder made of the above-mentioned metal, a lubricant, a solvent, a dispersant, a binder and the like to ceramic powder used as the above-mentioned material paste, are desirably used. With this arrangement, it becomes possible to adjust the thermal capacity of the plug manufactured through post processes, and also to prevent ceramic particles and the like in the sealing material (plug) paste from settling in the middle of the sealing process.
With respect to the above-mentioned ceramic fibers, not particularly limited, examples thereof include those formed by silica-alumina, mullite, alumina, silica and the like. Each of these materials may be used alone, or two or more of these may be used in combination.

Next, the ceramic dried body filled with the sealing material (plug) paste is subjected to degreasing and firing processes under predetermined conditions so that a honeycomb unit 20, which is made of porous ceramics and constituted by a single sintered body as a whole, is manufactured.
Here, with respect to the degreasing and firing conditions and the like of the ceramic dried body, it is possible to apply conditions that have been conventionally used for manufacturing a filter made of porous ceramics.

The honeycomb unit 20 is desirably made of ceramic crystals having a lower limit value of 2 µm and an upper limit value of 150 µm in the average particle size, and those having the lower limit value of 10 µm and the upper limit value of 70 µm are more desirably used. When the average particle size of the ceramic crystals is less than 2 µm, the pore diameter of pores that are contained inside the honeycomb unit becomes too small to cause clogging, failing to function as a filter. In contrast, the average particle size of the ceramic crystals exceeding 150 µm makes the pore diameter of the pores contained therein too large, causing a reduction in the strength of the honeycomb unit.
Moreover, manufacturing such a honeycomb unit that has ceramic crystals having open pores at a predetermined rate and an average particle size exceeding 150 µm itself is not easy. Here, the average pore diameter of this honeycomb unit is desirably set in a range from 1 to 40 µm.

In the case where a catalyst is supported on the honeycomb unit, an alumina film having a high specific surface area is formedon the surface of the ceramic firedbody thus formed through the firing process, and a co-catalyst and a catalyst such as platinum or the like are desirably applied onto the surface of the alumina film.

With respect to the method for forming the alumina film on the surface of the ceramic fired body, a method in which the ceramic fired body is impregnated with a solution of a metal compound containing aluminum such as Al(NO₃)₃ or the like and then heated and a method in which the ceramic fired body is impregnated with a solution containing alumina powder and then heated, and other methods may be used.
With respect to the method for applying a co-catalyst to the alumina film, for example, a method in which the ceramic fired body is impregnated with a solution of a metal compound containing a rare-earth element and the like, such as Ce(NO₃)₃ or the like, and then heated, and other methods are proposed.
With respect to the method for applying a catalyst to the alumina film, for example, a method in which the ceramic fired body is impregnated with a solution of diammine dinitro platinum nitric acid ([Pt(NH₃)₂(NO₂)₂]HNO₃ with a platinum density of 4.53% by weight) and then heated is proposed.

Moreover, in the honeycomb structural body of the present invention, a sealing material paste to form a sealing material layer 11 is applied to the side face of the honeycomb structural body 20 with a uniform thickness to form a sealing material paste layer, and another honeycomb structural body 20 is laminated thereon; thus, by successively repeating these processes, a honeycomb unit aggregated body having a predetermined size is manufactured.
Here, with respect to the material for forming the sealing material paste, since the explanation thereof has already been given, the detailed description thereof is omitted.

Next, this honeycomb unit aggregated body is heated so that the sealing material paste layer is dried and solidified to form the sealing material layer 11.
Next, the honeycomb unit aggregated body, constituted by apluralityof the honeycomb units 20 bonded to one another through the sealing material layer 11, is subjected to a cutting process by using a diamond cutter or the like so that the pattern of the sealing material layer 11 among the honeycomb units 20 on a cross section perpendicular to the length direction is aligned in a diagonal direction with respect to the major axis of a shape that forms the contour of the cross section; thus, a ceramic block 15 having a flat shape is manufactured.

Moreover, a sealing material layer 12 is formed on the periphery of each ceramic block 15 by using the sealing material paste so that a honeycomb structural body 10 comprising: a ceramic block 15 having a flat shape in which a plurality of honeycomb units 20 are bonded each other through a sealing material layer 11; and a sealing material layer 12 formed on a peripheral portion thereof, is manufactured.

Although not particularly limited, the honeycomb structural body of the present invention is desirably applied to an exhaust gas purifying device for use in vehicles.

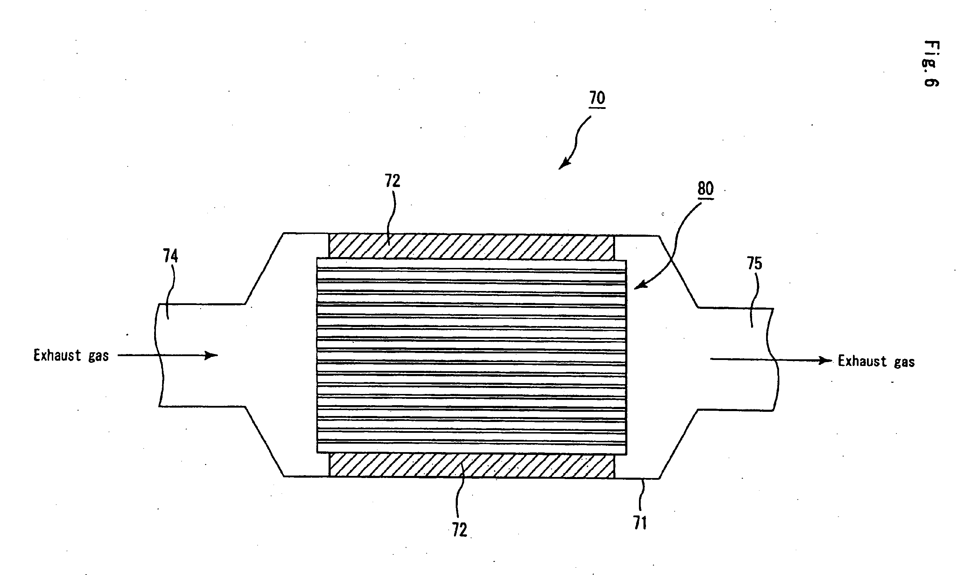

Fig. 6 is a cross-sectional view that schematically shows one example of an exhaust gas purifying device of a vehicle in which the honeycomb structural body of the present invention is installed.

As shown in Fig. 6, an exhaust gas purifying device 70 is mainly constituted by a honeycomb structural body 80, a casing 71 that covers the external portion of the honeycomb structural body 10, a holding sealing material 72 that is placed among the honeycomb structural body 80 and the casing 71, and an introducing pipe 74, which is connected to an internal-combustion system such as an engine or the like, is connected to one end of the casing 71 on the exhaust gas inlet side, and an exhaust pipe 75 externally coupled is connected to the other end of the casing 71. In Fig. 6, arrows indicate flows of exhaust gases.
Moreover, in Fig. 6, the honeycomb structural body 80 may be prepared as the honeycomb structural body 10 shown in Fig. 1 or as honeycomb structural body 30, 40 or 50, shown in Figs. 3 to 5. Here, the casing needs to have a shape that fits to each of the structural bodies.

In the exhaust gas purifying device 70 having the above-mentioned arrangement, exhaust gases, discharged from the internal combustion system such as an engine or the like, are directed into the casing 71 through the introducing pipe 74, and allowed to flow into the honeycomb structural body from the inlet-side through holes and to pass through the partition wall; thus, the exhaust gases are purified, with particulates thereof being collected in the partition wall, and are then discharged outside the honeycomb structural body from the outlet-side through holes, and externally discharged through the exhaust pipe 75.

In the exhaust gas purifying device 70, after a large quantity of particulates have been accumulated on the partition wall of the honeycomb structural body to cause an increase in pressure loss, the honeycomb structural body is subjected to a regenerating process.
In the regenerating process, gases, heated by using a heating means, not shown, are allowed to flow into the through holes of the honeycomb structural body so that the honeycomb structural body is heated to burn and eliminate the particulates accumulated on the partition wall. Here, the particulates may be burned and eliminated by using a post-injection system.

### EXAMPLES

The following description will discuss the present invention in detail by means of examples; however, the present invention is not intended to be limited by these examples.

### (Example 1)

(1) Powder of α-type silicon carbide having an average particle size of 10 µm (60%byweight) and powder of α-type silicon carbide having an average particle size of 0.5 µm (40% by weight) were wet-mixed, and to 100 parts by weight of the resulting mixture were added and kneaded 5 parts by weight of an organic binder (methyl cellulose) and 10 parts by weight of water to prepare amixedcomposition. Next, after a slight amount of aplasticizer and a lubricant had been added and further kneaded therein, the resulting mixture was extrusion-molded so that a raw molded product having a cross-sectional shape that was approximately the same as that shown in Fig. 2(a) was produced.

Next, after the above-mentioned raw molded product had been dried by using a microwave drier or the like to form a ceramic dried body, predetermined through holes were filled with a sealing material (plug) paste having the same composition as the raw molded product so as to have a thickness of 1.0 mm in the dried state.
After having been again dried by using a drier, the resulting product was degreased at 400°C, and fired at 2200°C in a normal-pressure argon atmosphere for 3 hours to manufacture a honeycomb unit 20, which was made of a silicon carbide sintered body and had a porosity of 42%, an average pore diameter of 9 µm, a size of 34.3 mm x 34.3 mm x 150 mm, the number of through holes 21 of 28pcs/cm² and a thickness of the partition wall 23 of 0.40 mm. Table 1 shows the cross-sectional area of the honeycomb unit. As shown in Table 1, the cross-sectional area of the honeycomb unit was 11.8 cm².
Thereafter, as shown in Fig. 2 (a) , in the honeycomb unit 20, through holes were sealed with the plugs so as to form a checked pattern. In other words, when one of the end faces is sealed with the plugs so as to have a pattern as shown in Fig. 2 (a) , the other end face is sealed with the plugs in a reversed pattern.

Next, by using a heat-resistant sealing material paste containing 30% by weight of alumina fibers having a fiber length of 0.2 mm, 21% by weight of silicon carbide particles having an average particle size of 0. 6 µm, 15% by weight of silica sol, 5.6% by weight of carboxymethyl cellulose and 28.4% by weight of water, a large number of the honeycomb units 20 were combined with one another, and this was then cut by using a diamond cutter to form a pattern as shown in Fig. 1 so that a ceramic block 15 having an elongated round shape in the contour of each end face was manufactured.
At this time, the thickness of the sealing material layer 11 used for bonding the honeycomb structural body 10 was adjusted to be 1.0 mm.

Next, ceramic fibers made of alumina silicate (shot content: 3%, fiber length: 0.1 to 100 mm) (23.3% by weight), which served as inorganic fibers, silicon carbide powder having an average particle size of 0.3 µm (30.2% by weight), which served as inorganic particles, silica sol (SiO₂ content in the sol: 30% by weight) (7% by weight), which served as an inorganic binder, carboxymethyl cellulose (0.5% by weight), which served as an organic binder, and water (39% by weight) were mixed and kneaded to prepare a sealing material paste.

Next, a sealing material paste layer was formed on the peripheral face of the ceramic block 15 by using the above-mentionedsealingmaterialpaste. Moreover, thissealing material paste layer was dried at 120°C to form a sealing material layer 12 so that a honeycomb structural body 10, which had an elongated round shape in the contour of each end face with the major axis of 200mm and the minor axis of 100 mm, with the thickness of the sealingmaterial layer being set to 0.2mm, wasmanufactured. Here, the cross-sectional area of the cross sectionperpendicular to the length direction of the honeycomb structural body was 179 cm², and on this cross section, the pattern of the sealing material layer among the honeycomb units and the major axis in the shape forming the contour of the cross section were allowed to make an angle of 5°. The maximum cross-sectional area of this honeycomb unit was 11.8 cm²

### (Examples 2 to 7, Comparative Examples 1 to 3)

The same processes as those of Example 1 were carried out except that the angle that was formed by the pattern of the sealing material layer among honeycomb units on a cross section perpendicular to the length direction and the major axis in the shape forming the contour of the cross section, and that the maximum cross-sectional area perpendicular to the length direction of the honeycomb unit were respectively set to values listed on Table 1 to prepare each honeycomb structural body 10.

### (Example 8)

The same processes as those of Example 1 were carried out except that the angle that was formed by the pattern of the sealing material layer among honeycomb units on a cross section perpendicular to the length direction and the major axis in the shape forming the contour of the cross section, and the maximum cross-sectional area perpendicular to the length direction of the honeycomb unit were respectively set to the values listed on Table 1, that the ceramic block was manufactured by using a heat resistant sealing material (adhesive) paste containing alumina fibers having a fiber length of 20 µm (30% by weight) , silicon carbide particles having an average particle size of 0. 6 µm (21% by weight) , silica sol (15% by weight), carboxymethyl cellulose (5.6% by weight) and water (28.4% by weight) as the sealingmaterial (adhesive) paste for bonding the honeycomb units 20, and that the sealing material layer was formed on the peripheral portion of the ceramic block 15 by using a peripheral portion sealing material paste containing ceramic fibers made of alumina silicate (shot content: 3%, fiber length: 5 to 100 mm) (23.3% by weight) , silicon carbide powder having an average particle size of 0.3 µm (30.2% by weight) , silica sol (SiO₂ content in the sol: 30% byweight) (7% by weight), carboxymethyl cellulose (0.5% by weight) and water (39% by weight), as the peripheral portion sealing material paste; thus, each of honeycomb structural bodies 10 was manufactured.

### (Examples 9 to 15, Comparative Examples 4 to 6)

The same processes as those of Example 1 were carried out except that the contour of the end face was formed into an elliptical shape as shown in Fig. 3, that the angle that was formed by the pattern of the sealing material layer among honeycomb units on a cross section perpendicular to the length direction and the major axis in the shape forming the contour of the cross section, and that the maximum cross-sectional area perpendicular to the length direction of the honeycomb unit were respectively set to values listed on Table 1, to prepare each honeycomb structural body 30.

### (Example 16)

The same processes as those of Example 9 were carried out except that the angle that was formed by the pattern of the sealing material layer among honeycomb units on a cross section perpendicular to the length direction and the major axis in the shape forming the contour of the cross section, and the maximum cross-sectional area perpendicular to the length direction of the honeycomb unit were respectively set to the values listed on Table 1, that the ceramic block was manufactured by using a heat resistant sealing material (adhesive) paste containing alumina fibers having a fiber length of 20 µm (30% by weight) , silicon carbide particles having an average particle size of 0.6 µm (21% by weight), silica sol (15% by weight) , carboxymethyl cellulose (5.6% by weight) and water (28.4% by weight) as the sealingmaterial (adhesive) paste for bonding the honeycomb units 20, and that the sealing material layer was formed on the peripheral portion of the ceramic block 15 by using a peripheral portion sealing material paste containing ceramic fibers made of alumina silicate (shot content: 3%, fiber length: 5 to 100 mm) (23.3% by weight), silicon carbide powder having an average particle size of 0.3 µm (30.2% by weight) , silica sol (SiO₂ content in the sol: 30% by weight) (7% by weight) carboxymethylcellulose (0.5% by weight) and water (39% by weight), as the peripheral portion sealing material paste; thus, each of honeycomb structural bodies 10 was manufactured.

### (Examples 17 to 23, Comparative Examples 7 to 9)

The same processes as those of Example 1 were carried out except that the contour of the end face was formed into an approximately trapezoidal shape as shown in Fig. 5, that the angle that was formed by the pattern of the sealing material layer among honeycomb units on a cross section perpendicular to the length direction and the major axis in the shape forming the contour of the cross section, and that the maximum cross-sectional area perpendicular to the length direction of the honeycomb unit were respectively set to the values listed on Table 1 to prepare each honeycomb structural body 50.

### (Example 24)

The same processes as those of Example 17 were carried out except that the angle that was formed by the pattern of the sealing material layer among honeycomb units on a cross section perpendicular to the length direction and the major axis in the shape forming the contour of the cross section, and the maximum cross-sectional area perpendicular to the length direction of the honeycomb unit were respectively set to the values listed on Table 1, that the ceramic block was manufactured by using a heat resistant sealing material (adhesive) paste containing alumina fibers having a fiber length of 20 µm (30% by weight) , silicon carbide particles having an average particle size of 0.6 µm (21% by weight) , silica sol (15% by weight) , carboxymethyl cellulose (5.6% by weight) and water (28.4% by weight) as the sealing material (adhesive) paste for bonding the honeycomb units 20, and that the sealing material layer was formed on the peripheral portion of the ceramic block 15 by using a peripheral portion sealing material paste containing ceramic fibers made of alumina silicate (shot content: 3%, fiber length: 5 to 100 mm) (23.3% by weight), silicon carbide powder having an average particle size of 0.3 µm (30.2% by weight), silica sol (SiO₂ content in the sol: 30% by weight) (7% by weight), carboxymethyl cellulose (0.5% by weight) and water (39% by weight), as the peripheral portion sealing material paste; thus, each of honeycomb structural bodies 10 was manufactured.

### (Reference Examples 1 and 2)

The same processes as those of Example 1 were carried out except that the maximum cross-sectional area perpendicular to the length direction of the honeycomb unit was changed into each of values shown in Table 1 to prepare each of honeycomb structural bodies 10. Here, with respect to the dimension of the cross section perpendicular to the length direction of the honeycomb unit, it was set to 5.2 cm x 5.2 cm in Reference Example 1, and to 6.3 cm x 6.3 cm in Reference Example 2.

### (Evaluation)

### (1) Thermal impact test (sealing material layer peripheral portion)

The honeycomb structural body according to each of the examples and comparative examples was put into an electric furnace, and subjected to a thermal impact test in which after having been maintained at 700°C for 30 minutes with the temperature-rising rate being changed, it was gradually cooled to room temperature (20°C).
The thermal impact test was carried out, with the highest temperature being changed, to find test conditions that would cause cracks in the sealing material layer (peripheral portion) of the honeycomb structural body; thus, the temperature-rising rate under the test conditions was defined as the thermal impact-resistance limit temperature rising rate of the honeycomb structural body. The test results of the respective honeycomb structural bodies according to the examples and comparative examples are shown in Table 1.

### (2) Thermal impact test (sealingmaterial layer joining portion)

The honeycomb structural body according to each of the examples and comparative examples was put into an electric furnace, and subjected to a thermal impact test in which after having been maintained at 700°C for 30 minutes with the temperature-rising rate being changed (10°C/min, 20°C/min) , it was gradually cooled to room temperature (20°C).
After the thermal impact test, each of the honeycomb structural bodies was put into a hollow cylindrical jig. Then, one of the honeycomb filters, located approximately in the center of the honeycomb structural body, was selected, and a pressure was applied to the honeycomb filter in a pulling-out direction by the cylindrical jig made of stainless having a diameter of 31 mm so that the breaking load (bonding strength) was measured, and based upon the results, the pulling-out load (breaking load) of the sealing material layer joining portion that had received a thermal impact was defined.
The results of the tests on the honeycomb structural bodies according to the examples and comparative examples at this time are shown in Table 1.

### (3) Machining resistance to machining process

A cam-grinding machine (N34) manufactured by Okuma Corporation was used as the machining device. Here, a grindstone SD20N75MF04 was fixed at a rotational speed of 60 m/sec in the peripheral speed of the grindstone rotation, and the two members were rotated, with the number of revolutions of the honeycomb structural body being set to 20 rpm, so that a cutting process was carried out in the length direction with the speed (traverse machining speed) in the length direction being changed; thus, the maximum machining speed was measured while it was observed whether or not any cracks would occur.
Table 1 shows the measured results of the speed at which cracks occurred in the honeycomb structural body according to each of the examples and comparative examples.

**Table 1-1**

| | Cross-sectional shape of honeycomb structural body | Maximum cross-sectional area (cm²) | Angle (°) | Thermal impact-resistance limit temperature -rising rate (°C/min) | Push-out load (kg) | | Limit processing rate (mm/ min) |
|---|---|---|---|---|---|---|---|
| | | | | | (After thermal treatment of 10°C/min) | (After thermal treatment of 20°C/min) | |
| Example 1 | Fig. 1 (Elongated round shape) | 11.8 | 5 | 10 | 1500 | 1000 | 200 |
| Example 2 | Fig. 1 (Elongated round shape) | 11.8 | 15 | 15 | 1600 | 1400 | 230 |
| Example 3 | Fig. 1 (Elongated round shape) | 11.8 | 30 | 18 | 1650 | 1950 | 240 |
| Example 4 | Fig. 1 (Elongated round shape) | 11.8 | 45 | 20 | 1700 | 1500 | 250 |
| Example 5 | Fig. 1 (Elongated round shape) | 11.8 | 60 | 18 | 1650 | 1450 | 240 |
| Example 6 | Fig. 1 (Elongated round shape) | 11.8 | 75 | 15 | 1600 | 1400 | 230 |
| Example 7 | Fig. 1 (Elongated round shape) | 11.8 | 85 | 10 | 1500 | 1000 | 200 |
| Examples 8 | Fig. 1 (Elongated round shape) | 11.8 | 45 | 20 | 1700 | 1500 | 250 |
| Compar.Ex.1 | Fig. 1 (Elongated round shape) | 11.8 | 0 | 5 | 900 | 500 | 185 |
| Compar.Ex.2 | Fig. 1 (Elongated round shape) | 11.8 | 3 | 7 | 1000 | 600 | 180 |
| Compar.Ex.3 | Fig. 1 (Elongated round shape) | 11.8 | 88 | 7 | 1000 | 600 | 185 |
| Example 9 | Fig. 3 (Elliptical shape) | 11.8 | 5 | 10 | 1500 | 1000 | 200 |
| Example 10 | Fig. 3 (Elliptical shape) | 11.8 | 15 | 15 | 1600 | 1400 | 230 |

**Table 1-2**

| | Cross-sectional shape of honeycomb structural body | Maximum cross-sectional area (cm²) | Angle (°) | Thermal impact resistance limit temperature -rising rate (°C/min) | Push-out load (kg) | | Limit processing rate (mm/ min) |
|---|---|---|---|---|---|---|---|
| | | | | | (After thermal treatment of 10°C/min) | (After thermal treatment of 20°C/min) | |
| Example 11 | Fig. 3 (Elliptical shape) | 11.8 | 30 | 18 | 1650 | 1450 | 240 |
| Example 12 | Fig. 3 (Elliptical shape) | 11.8 | 45 | 20 | 1700 | 1500 | 250 |
| Example 13 | Fig. 3 (Elliptical shape) | 11.8 . | 60 | 18 | 1650 | 1450 | 240 |
| Example 14 | Fig. 3 (Elliptical shape) | 11.8 | 75 | 15 | 1600 | 1400 | 230 |
| Example 15 | Fig. 3 (Elliptical shape) | 11.8 | 85 | 10 | 1500 | 1000 | 200 |
| Example 16 | Fig. 3 (Elliptical shape) | 11.8 | 45 | 20 | 1700 | 1500 | 250 |
| Compar.Ex.4 | Fig. 3 (Elliptical shape) | 11.8 | 0 | 5 | 900 | 5.00 | 185 |
| Compar.Ex.5 | Fig. 3 (Elliptical shape) | 11.8 | 3 | 7 | 1000 | 600 | 180 |
| Compar.Ex.6 | Fig. 3 (Elliptical shape) | 11.8 | 88 | 7 | 1000 | 600 | 185 |
| Example 17 | Fig. 4 (Approximately triangular shape) | 11.8 | 5 | 10 | 1500 | 1000 | 200 |
| Example 18 | Fig. 4 (Approximately triangular shape) | 11.8 | 15 | 15 | 1600 | 1400 | 230 |
| Example 19 | Fig. 4 (Approximately triangular shape) | 11.8 | 30 | 18 | 1650 | 1450 | 240 |
| Example 20 | Fig. 4 (Approximately triangular shape) | 11.8 | 45 | 20 | 1700 | 1500 | 250 |

**Table 1-3**

| | Cross-sectional shape of honeycomb structural body | Maximum cross-sectional area (cm²) | Angle (°) | Thermal impact resistance limit temperature -rising rate (°C/min) | Push-out load (kg) | | Limit processing rate (mm/ min) |
|---|---|---|---|---|---|---|---|
| | | | | | (After thermal treatment of 10°C/min) | (After thermal treatment of 20°C/min) | |
| Example 21 | Fig. 4 (Approximately triangular shape) | 11.8 | 60 | 18 | 1650 | 1450 | 240 |
| Example 22 | Fig. 4 (Approximately triangular shape) | 11.8 | 75 | 15 | 1600 | 1400 | 230 |
| Example 23 | Fig. 4 (Approximately triangular shape) | 11.8 | 85 | 10 | 1500 | 1000 | 200 |
| Example 24 | Fig. 4 (Approximately triangular shape) | 11.8 | 45 | 20 | 1700 | 1500 | 250 |
| Compar.Ex.7 | Fig. 4 (Approximately triangular shape) | 11.8 | 0 | 5 | 900 | 500 | 185 |
| Compar.Ex.8 | Fig. 4 (Approximately triangular shape) | 11.8 | 3 | 7 | 1000 | 600 | 180 |
| Compar.Ex.9 | Fig. 4 (Approximately triangular shape) | 11.8 | 88 | 7 | 1000 | 600 | 185 |
| Ref. Ex.1 | Fig. 1 (Elongated round shape) | 27.0 | 45 | 11 | 1550 | 1050 | 245 |
| Ref.Ex.2 | Fig. 1 (Elongated round shape) | 40.0 | 45 | 10 | 1500 | 1000 | 240 |

As shown in Table 1, the honeycomb structural body, which relates to the embodiments in which the pattern of the sealing material layer among the honeycomb units on a cross section perpendicular to the length direction is formed in a diagonal direction with respect to the major axis of a shape that forms the contour of the cross section, is allowed to exert superior thermal impact resistance and machining resistance in both of the peripheral sealing material and the sealing material serving as the bonding material; in contrast, the honeycomb structural body, which relates to the comparative examples in which the pattern of the sealing material layer among the honeycomb units on a cross section perpendicular to the length direction is formed in approximately a perpendicular direction to the major axis of a shape that forms the contour of the cross section, is inferior in the thermal impact resistance and machining resistance in both of the peripheral sealing material and the sealing material serving as the bonding material in comparison with the honeycomb structural body according to the examples. Moreover, the honeycomb structural body, which relates to the reference examples in which the cross-sectional area of the honeycomb unit is set to 25 cm² or more, is slightly inferior in the thermal impact resistance in comparison with that of the examples.

### BRIEF DESCRIPTION OF THE DRAWINGS

Fig. 1(a) is a perspective view that schematically shows one example of a honeycomb structural body of the present invention, and Fig. 1(b) is a drawing that shows the major axis and the minor axis of the honeycomb structural body of Fig. 1(a) .
Fig. 2 (a) is a perspective view that schematically shows one example of a honeycomb unit that forms the honeycomb structural body of the present invention, and Fig. 2(b) is a cross-sectional view taken along line A-A of the honeycomb unit shown in Fig. 2(a).
Fig. 3 is a cross-sectional view that schematically shows a cross section perpendicular to the length direction of another example of the honeycomb structural body of the present invention.
Fig. 4 is a cross-sectional view that schematically shows a cross section perpendicular to the length direction of still another example of the honeycomb structural body of the present invention.
Fig. 5 is a cross-sectional view that schematically shows a cross section perpendicular to the length direction of the other example of the honeycomb structural body of the present invention.
Fig. 6 is a cross-sectional view that schematically shows one example of an exhaust gas purifying device for a vehicle in which the honeycomb structural body of the present invention is installed.
Fig. 7 (a) is a perspective view that schematically shows a conventional honeycomb structural body, and Fig. 7(b) is a partially enlarged perspective view that shows one portion of the honeycomb structural body shown in Fig. 7 (a) in an enlarged manner.
Fig. 8 (a) is a perspective view that schematically shows one example of a honeycomb unit that forms the conventional honeycomb structural body, and Fig. 8(b) is a cross-sectional view taken along line A-A of the honeycomb unit shown in Fig. 8 (a).

### EXPLANATION OF SYMBOLS

10, 20, 30, 40, 50 Aggregated-type honeycomb structural body
11, 31, 41, 51, Sealing material layer (adhesive layer)
12, 32, 42, 52 Sealing material layer (coat layer)
33, 43, 53 Honeycomb unit
15 Ceramic block
20 Honeycomb unit
21 Through hole
22 Plug
23 Partition wall

## Claims

1. A honeycomb structural body comprising:
a ceramic block having a flat shape on a cross section perpendicular to the length direction in which a plurality of honeycomb units are bonded to each other through a sealing material layer, said honeycomb units being mainly composed of porous ceramic and including a large number of through holes placed in parallel with one another in the length direction with a partition wall interposed therebetween; and
a sealing material layer formed on a peripheral portion thereof,
wherein
said sealing material layer among the honeycomb units and said sealing material layer on the peripheral portion both comprise silicon carbide, and
the sealing material layer among the honeycomb units on said cross section has a pattern that is formed in a diagonal direction with respect to the major axis of the shape forming the contour of said cross section.

2. The honeycomb structural body according to claim 1,
wherein
a said honeycomb unit has a cross-sectional area of 25 cm² or less in a direction perpendicular to the length direction.

3. The honeycomb structural body according to claim 1 or 2,
wherein
the angle, formed by the pattern of the sealing material layer among the honeycomb units on the cross section perpendicular to the length direction and the major axis of the shape forming the contour of the cross section, is set in a range from 5 to 85°.

4. The honeycomb structural body according to any of claims 1 to 3,
Wherein
said honeycomb unit is made of silicon carbide-natured ceramics.

5. The honeycomb structural body according to any of claims 1 to 4,
further comprising a catalyst supported thereon.

6. The honeycomb structural body according to any of claims 1 to 5,
wherein each of said through holes is sealed on either one of the end sides.

7. The honeycomb structural body according to any of claims 1 to 6,
wherein
said sealing material layer on the peripheral portion is formed after said sealing material layer among the honeycomb units is dried.

8. A method for manufacturing a honeycomb structural body having a flat shape on a cross section perpendicular to the length direction,
comprising the steps of:
the honeycomb unit bonding process of bonding a plurality of honeycomb units, each of which is mainly composed of porous ceramics and includes a large number of through holes placed in parallel with one another in the length direction with a partition wall interposed therebetween, to one another through a sealing material layer comprising silicon carbide and drying the sealing material layer;
the ceramic block manufacturing process of carrying out a cutting process on a honeycomb unit aggregated body in which a plurality of honeycomb units are bonded to each other through the sealing material layer in a manner such that the pattern of the sealing material layer among the honeycomb units on said cross-section is formed in a diagonal direction with respect to the major axis of the shape forming the contour of the cross section so as to obtain a ceramic block having said flat shape, and
the process of forming a sealing material layer comprising silicon carbide on a peripheral portion of said ceramic block.

## Patentansprüche

1. Wabenstrukturkörper, der aufweist:
einen Keramikblock von flacher Form in einem Querschnitt senkrecht zur Längenrichtung, in dem mehrere Wabeneinheiten durch eine Dichtungsmaterialschicht aneinander gebunden sind, wobei die Wabeneinheiten hauptsächlich aus poröser Keramik bestehen und eine große Zahl von Durchgangslöchern aufweisen, die in Längenrichtung parallel zueinander mit einer dazwischen eingefügten Trennwand angeordnet sind; und
eine an seinem Umfangsabschnitt ausgebildete Dichtungsmaterialschicht,
wobei
die Dichtungsmaterialschicht zwischen den Wabeneinheiten und die Dichtungsmaterialschicht am Umfangsabschnitt beide Siliciumcarbid aufweisen, und
die Dichtungsmaterialschicht zwischen den Wabeneinheiten in dem Querschnitt eine Struktur aufweist, die in Diagonalrichtung bezüglich der Hauptachse der die Querschnittskontur bildenden Form ausgebildet ist.

2. Wabenstrukturkörper nach Anspruch 1,
wobei
die Wabeneinheit eine Querschnittsfläche von 25 cm² oder weniger in einer zur Längenrichtung senkrechten Richtung aufweist.

3. Wabenstrukturkörper nach Anspruch 1 oder 2,
wobei
der Winkel, der durch die Struktur der Dichtungsmaterialschicht zwischen den Wabeneinheiten in dem Querschnitt senkrecht zur Längenrichtung und die Hauptachse der die Querschnittskontur bildenden Form gebildet wird, auf einen Bereich von 5 bis 85° eingestellt ist.

4. Wabenstrukturkörper nach einem der Ansprüche 1 bis 3,
wobei
die Wabeneinheit aus siliciumcarbidartiger Keramik besteht.

5. Wabenstrukturkörper nach einem der Ansprüche 1 bis 4,
der ferner einen darauf geträgerten Katalysator aufweist.

6. Wabenstrukturkörper nach einem der Ansprüche 1 bis 5,
wobei jedes der Durchgangslöcher an einer der Stirnseiten verschlossen ist.

7. Wabenstrukturkörper nach einem der Ansprüche 1 bis 6,
wobei
die Dichtungsmaterialschicht am Umfangsabschnitt ausgebildet wird, nachdem die Dichtungsmaterialschicht zwischen den Wabeneinheiten getrocknet ist.

8. Verfahren zur Herstellung eines Wabenstrukturkörpers von flacher Form in einem Querschnitt senkrecht zur Längenrichtung,
das die folgenden Schritte aufweist:
den Wabeneinheitbindungsprozeß, in dem mehrere Wabeneinheiten, die jeweils hauptsächlich aus poröser Keramik bestehen und jeweils eine große Zahl von Durchgangslöchern aufweisen, die in Längsrichtung parallel zueinander mit einer dazwischen eingefügten Trennwand angeordnet sind, durch eine Dichtungsmaterialschicht, die Siliciumcarbid aufweist, miteinander verbunden werden und die Dichtungsmaterialschicht getrocknet wird;
den Keramikblockherstellungsprozeß, in dem ein Schneidvorgang an einem aus zusammengefügten Wabeneinheiten bestehenden Körper, in dem mehrere Wabeneinheiten durch die Dichtungsmaterialschicht miteinander verbunden sind, so ausgeführt wird, daß die Struktur der Dichtungsmaterialschicht zwischen den Wabeneinheiten des Querschnitts in Diagonalrichtung bezüglich der Hauptachse der die Querschnittskontur bildenden Form ausgebildet wird, um einen Keramikblock mit der flachen Form zu erhalten, und
den Vorgang zur Ausbildung einer Dichtungsmaterialschicht, die Siliciumcarbid aufweist, an einem Umfangsabschnitt des Keramikblocks.

## Revendications

1. Corps structural en nid d'abeilles comprenant :
un bloc céramique ayant une forme plate sur une section droite perpendiculaire à la direction longitudinale où une pluralité d'unités de nid d'abeilles sont liées entre elles via une couche de matériau d'étanchéité, lesdites unités de nid d'abeilles étant composées principalement de céramique poreuse et incluant un grand nombre de trous traversants placés en parallèle entre eux dans la direction longitudinale avec une paroi de séparation interposée entre eux ; et
une couche de matériau d'étanchéité formée sur une partie périphérique de celui-ci,
où
ladite couche de matériau d'étanchéité parmi les unités de nid d'abeilles et ladite couche de matériau d'étanchéité sur la partie périphérique comprennent l'une et l'autre du carbure de silicium, et
la couche de matériau d'étanchéité parmi les unités de nid d'abeilles sur ladite section droite a un motif qui est formé dans une direction diagonale par rapport au grand axe de la forme formant le contour de ladite section droite.

2. Corps structural en nid d'abeilles selon la revendication 1
où
une dite unité de nid d'abeilles a une aire en section droite de 25 cm² ou moins dans une direction perpendiculaire à la direction longitudinale.

3. Corps structural en nid d'abeilles selon la revendication 1 ou 2
où
l'angle formé par le motif de la couche de matériau d'étanchéité parmi les unités de nid d'abeilles sur la section droite perpendiculaire à la direction longitudinale et le grand axe de la forme formant le contour de la section droite est fixé dans une plage de 5 à 85°.

4. Corps structural en nid d'abeilles selon l'une quelconque des revendications 1 à 3
où
ladite unité de nid d'abeilles est constituée par une céramique de type carbure de silicium.

5. Corps structural en nid d'abeilles selon l'une quelconque des revendications 1 à 4 comprenant en outre un catalyseur supporté sur lui.

6. Corps structural en nid d'abeilles selon l'une quelconque des revendications 1 à 5 où chacun desdits trous traversants est fermé hermétiquement sur l'un ou l'autre des côtés terminaux.

7. Corps structural en nid d'abeilles selon l'une quelconque des revendications 1 à 6 où ladite couche de matériau d'étanchéité sur la partie périphérique est formée après que ladite couche de matériau d'étanchéité parmi les unités de nid d'abeilles soit séchée.

8. Procédé pour fabriquer un corps structural en nid d'abeilles ayant une forme plate sur une section droite perpendiculaire à la direction longitudinale comprenant les étapes de :
le procédé de liaison des unités de nid d'abeilles de liaison d'une pluralité d'unités de nid d'abeilles, qui sont chacune composées principalement de céramique poreuse et incluent un grand nombre de trous traversants placés en parallèle entre eux dans la direction longitudinale avec une paroi de séparation disposée entre eux, via une couche de matériau d'étanchéité comprenant du carbure de silicium et de séchage de la couche de matériau d'étanchéité ;
le procédé de fabrication de bloc céramique de mise en oeuvre d'un procédé de découpage sur un corps agrégé d'unités de nid d'abeilles où une pluralité d'unités de nid d'abeilles sont liées entre elles via la couche de matériau d'étanchéité d'une manière telle que le motif de la couche de matériau d'étanchéité parmi les unités de nid d'abeilles sur ladite section droite est formé dans une direction diagonale par rapport au grand axe de la forme formant le contour de la section droite de manière à obtenir un bloc céramique ayant ladite forme plate, et
le procédé de formation d'une couche de matériau d'étanchéité comprenant du carbure de silicium sur une partie périphérique dudit bloc céramique.
